(19)

Europäisches
Patentamt

European
Patent Office

Office européen
des brevets

(11) **EP 4 635 287 A1**

(12) **EUROPEAN PATENT APPLICATION**

(43) Date of publication:
**22.10.2025 Bulletin 2025/43**

(21) Application number: **24170542.5**

(22) Date of filing: **16.04.2024**

(51) International Patent Classification (IPC):
***A01D 41/127*** *(2006.01)*

(52) Cooperative Patent Classification (CPC):
**A01D 41/1277; A01D 41/127**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **CNH Industrial Belgium N.V.
8210 Zedelgem (BE)**

(72) Inventors:
- **LEBLICQ, Tom
  8210 Zedelgem (BE)**
- **BORN, Mathias
  8210 Zedelgem (BE)**
- **SAMUDRALA CHNADRASEKAR, Keerthitheja
  8210 Zedelgem (BE)**

(74) Representative: **CNH Industrial IP Department
Leon Claeysstraat 3A
8210 Zedelgem (BE)**

(54) **IMPROVEMENTS ON DETERMINATION OF ONBOARD KERNEL PROCESSING SCORE**

(57) Method for determining a kernel processing score (KPS) onboard of an agricultural machine (20), the agricultural machine (20) comprising a conveyor means (23) for transferring harvested crop material (15) and an optical sensor (21), wherein the optical sensor (21) is configured to generate image data of the harvested crop material (15) transferred by and/or within the conveyor means (23), an image processing system configured for processing the generated image data to determine a kernel processing score (KPS), wherein the method comprises the steps of:
a) receiving image data from the optical sensor (21);
b) identifying at least parts of kernel particles and a quantity thereof within the received image data;
c) determining a size or surface of each identified kernel particle in said image data;
d) generating a histogram based on the detected size or surface of the identified kernel particles and their quantities;
e) analysing the histogram by applying a mathematical function to the generated histogram to increase the informative value of the image data; and
f) determining the KPS based on the analysing step.

Fig. 3

EP 4 635 287 A1

**EP 4 635 287 A1**

**Description**

Agricultural machines such as forage harvesters harvest a crop from a field and afterwards directly process the harvested crop material on the machine. An important application of forage harvesters is the processing of corn. During harvesting, the corn plants are cut from the field, and the corncobs are collected and chopped up using kernel processors of the forage harvester. Usually, the chopped up crop material including the cut particles of the corncob are then transferred via a tube to an internal or external container. The harvested crop material may be used to feed livestock such as ruminants. Alternatively, the crop material may be processed in biogas plants.

It is essential for the grain components of the crop material, i.e. the kernels of the corn, to be cracked (e.g., comminuted) to obtain rather small particles and thus an increased surface area of the crop material. For the livestock, this means an increased number of more easily digestible nutrients and thus an improved feed quality. Therefore, it is advantageous for the number of intact kernels after processing the crop material to be as low as possible.

In recent years, the kernel processing score (KPS) which is also known as corn silage processing score (CSPS) has become an industry standard for evaluating the quality of the feed material in the agricultural industry. The KPS gives information about the total digestible nutrients of the feed for the livestock, in particular cattle. For example, studies have shown that corn kernel particles retained on a 4,75 mm sieve are incompletely fermented in the rumen of a cow and digestion of these particles larger than 4,75 mm is insufficient. The KPS therefore specifies the mass percentage of processed or non-processed dried kernels passing through a 4,75 mm sieve. Additionally, the starch of the kernels not passing through the 4,75 mm sieve can be determined and compared with a determined total starch of the feeding stuff for which the KPS value is to determine.

Determining the KPS value for harvested crop material from a field is complex, costly and needs to be done at a specialized laboratory or with special equipment after harvesting the crop material. Consequently, the determination of the KPS value takes several days when done in a laboratory. This results in an overall delay and thus adds a complexity to the further processing and a financial disadvantage for farmers and/or breeders, respectively.

Several attempts have been made to determine the KPS value during harvesting and/or further processing of the feed. One known method is to capture and analyse images of the processed feeding stuff during transfer within a spout of a forage harvester, wherein the KPS is determined by machine learning. However, this method suffers from a variety of drawbacks, which have not been overcome. For instance, a portion of the processed kernels is so small that they cannot be recognized within the image. Furthermore, there is a large uncertainty regarding the classification of such small kernel particles within the image data distinguishing them from other plant material or foreign matter. However, the determination of such small kernel particles is necessary for the accuracy of the KPS value regarding the sieved mass percentage to determine an accurate KPS value that is comparable to KPS values conventionally determined in laboratories.

It is therefore the object of the present invention to provide a method for determining a KPS value onboard of an agricultural machine and an agricultural machine which is designed to determine a KPS value which overcome at least one of the above mentioned drawbacks when determining a KPS value onboard of an agricultural machine during harvesting and/or further processing of crop material to enhance the accuracy of such determined KPS values.

A first aspect according to the present invention is a method for determining a kernel processing score (KPS) onboard of an agricultural machine. The agricultural machine comprises a conveyor means for transferring harvested crop material, an optical sensor wherein the optical sensor is configured to generate image data of the harvested crop material transferred by and/or within the conveyor means, and an image processing system configured for processing the generated image data to determine a KPS. The method according to the present invention comprises the steps of:

a) receiving image data from the optical sensor;

b) identifying at least parts of kernel particles and a quantity thereof within the received image data;

c) determining a size or surface of each identified kernel particle in said image data;

d) generating a histogram based on the detected size or surface of the identified kernel particles and their quantities;

e) analysing the histogram by applying a mathematical function to the generated histogram to increase the informative value of the image data; and

f) determining the KPS based on the analysing step.

By using this inventive method, the accuracy of an onboard and online determination of a KPS value can be significantly enhanced. Further, an automation of the processing of the feed material can be provided using the determined KPS value according to method of the present invention as an active feedback of a control circuit, or closed loop control,

2

respectively, enabling to fabricate feed material onboard of an agricultural machine according to set KPS values. This results in a higher quality of the feed material and thus in higher yields for livestock farmers and/or breeders. Additionally, the feed can immediately be further processed, fed, or disposed, i.e. without a testing timespan which gives an economic advantage for farmers and breeders.

In embodiments, the agricultural machine can be any of a combine harvester, a forage harvester, a silage blower, a silage press, a crop material chopper, a trailer or truck with a container and a discharge means, a conveyor device for transferring crop material from one location to another, etc. Alternatively, the agricultural machine might be a self-propelled agricultural vehicle, an implement coupled to and driven by a self-propelled agricultural vehicle, or a stationary machine. Alternatively, the inventive method may also be carried out not onboard of an agricultural machine but, for example, on samples taken from the processed crop material.

In other embodiments, the conveyor means can be a spout, a chute, a gravity chute, a dumping surface, a corn elevator, a conveyor belt, a conveyor chain, a bucket chain, an Archimedean screw, or similar means configured for transporting, transferring, or moving crop material.

In preferred embodiments, the optical sensor may be any of a sensor capable of capturing 2D or 3D images of harvested material transferred on or within the conveyor means. The optical sensor is most preferably a camera. The optical sensor may also be a line camera, a laser sensor, an ultrasound sensor, or a similar device designed to capture a 2D image.

In embodiments it is imaginable that multiple optical sensors are directed to the crop material on and/or within the conveyor means. For example, multiple optical sensors may be directed to different areas of the conveyor means, for example arranged next to each other and orthogonal to a conveying direction or adjacent to each other in the conveying direction of the crop material. Preferably, multiple optical sensors may be oriented in an angle orthogonal to the conveying direction. Preferably, the optical sensor can be communicatively connected to the image processing system and/or a control unit of the agricultural machine. It is noted that the terms feed, feed material and crop material can be used synonymously.

In preferred embodiments the image data captured and generated by the optical sensor may be received in the imaging processing system. The imaging processing system can be a separate system or may be integrated within a control unit onboard of the agricultural machine. In other embodiments, the imaging processing system may be remote of the agricultural machine and communicatively connected with the agricultural machine or with the at least one optical sensor onboard of the agricultural machine. Alternatively, the image processing system may be a separate system for retrofit applications at agricultural machines. In the latter case, the image processing system can be a computer, cloud computer, mobile phone, or tablet computer configured to carry out the determination of the KPS value according to the method of the invention which is communicatively connected to the at least one image sensor.

In preferred embodiments the identifying of at least parts of kernel particles and a quantity thereof within the received image data may be carried out within the image processing system, also referred to as first model, with state of the art image recognition by determination of features based on pixel information within the image data. This can be achieved by comparison to a sample image or by neural networks, e.g. convolutional neural networks (CNN), artificial neuronal networks (ANN), or any other suitably neuronal network or machine learning algorithm capable of feature recognition and/or classification on the basis of image data.

In other preferred embodiments the size of the kernel particles may be determined by measuring size parameters of the kernel particles in a way simulating a sieving process of the identified kernel particles within the image data with multiple sieves of preset mesh widths. The mesh width of the simulated sieve, which the identified kernel particles passes through in the simulation may be determined as the kernel particle size. In other embodiments the size parameter of a kernel particle may comprise a radius, a diameter, a length and a width, or combination thereof that has been determined within the image data. Additionally, if multiple size parameters of a kernel particle are determined, these size parameters are preferably represented by one common indicator representing the kernel particle size or surface, e.g. by adding the determined length and width of the kernel particle. Further, the surface of the kernel particles is preferably based on the detected circumference or is preferably estimated based on the determined size of the detected kernel particle within the captured image data.

Optionally, the determination of the size or the surface of the kernel particles determined within the image data may manually or automatically be selected by an operator of the agricultural machine or the image processing system itself. Alternatively, the automatic selection whether the size or the surface of the kernel particles will be determined is based on the type of crop material and/or other data or information, which will be specified in the following.

In preferred embodiments, the histogram gives information about a probability distribution of the kernel particle size or surface. The kernel particle size or surface may be distributed in regular classes or in irregular classes. Most preferably, the kernel particle size or surface is distributed in regular classes. The histogram preferably represents the distribution of the kernel particle size or surface over the quantity of the detected kernel particles within predetermined regular classes of kernel particle sizes or surfaces. The histogram can be an ordinary histogram or a cumulative histogram. Histograms are well known in statistics as well as their generation and analysis. Alternatively, multiple histograms may be generated for each determined size parameter or surface, e.g. when determining multiple size parameters and/or surfaces per kernel particle as described above.

It is noted that the generated histogram only comprises size or surface values and quantities of identified kernel particles within the captured image data. Consequently, kernel particles that could not be classified or distinguished from other crop material or foreign matter, in particular kernel particles and parts thereof which are too small to identify, are not included in the generated histogram.

Preferably, the histogram analysis step is performed such that the results of the applied mathematical function provide information about the kernel particles or parts thereof that could not be identified within the captured image data. Hence, applying the mathematical function increases the informative value of the image data regarding the kernel particles which cannot be directly identified therefrom. In other words, increasing the informative value of the captured image data comprises determining the quantity of kernel particles and their size or surface distribution that are present in the captured image data of harvested crop material but which were not previously identified as at least parts of kernel particles.

In favourable embodiments, the KPS value may be determined based on the results of the mathematical function of the analysing step. For instance, the KPS value can be mapped or assigned according to the results of the analysing step. Optionally, the KPS value may be determined by machine learning using the results of the mathematical function of the analysing step as an input. It is noted that the terms KPS and KPS value can be used synonymously.

In preferred embodiments, applying the mathematical function comprises fitting of a continuous probability distribution or a polynomial regression, both also referred to as second model, to the generated histogram thereby determining the parameters of the second model. The fitting of the probability distribution or the polynomial regression as the second model makes the KPS estimation more robust, as individual wrongly or less accurately determined single kernel particles or their size or surface in the first model do influence the estimation less.

Optionally, applying the mathematical function comprises fitting of a continuous cumulative distribution, depending on the type of the generated histogram. The probability distribution may be one of a log-normal distribution, a log-hyperbolic distribution, a skew log-Laplace distribution, preferably a Burr distribution, or most preferably an exponentiated Weibull distribution. Other non-listed distributions are also imaginable. Below, exemplary formulas are presented for explanatory purposes as working examples. Other non-listed and non-presented formulas can be found in mathematical and statistical handbooks.

The Burr distribution can be calculated by:

$$f(x; c, k, \lambda) = \frac{ck}{\lambda} \left(\frac{x}{\lambda}\right)^{c-1} \left[1 + \left(\frac{x}{\lambda}\right)^c\right]^{-k-1}$$

wherein x is the variable, in particular the size or surface of the kernel particle or kernel particle distribution class within the histogram, k is a first shape parameter, c is a second shape parameter, and $\lambda$ is a scale parameter, wherein the described parameters are the results of the analysing step. For fitting purposes to the histogram, x might be the median or average value of the class width of the histogram representing the determined kernel particle size or surface.

The cumulative Burr distribution can be calculated by:

$$F(x; c, k, \lambda) = 1 - \left[1 + \left(\frac{x}{\lambda}\right)^c\right]^{-k}$$

The exponentiated Weibull distribution can be calculated by:

$$f(x; k, \lambda; \alpha) = \alpha \frac{k}{\lambda} \left[\frac{x}{\lambda}\right]^{k-1} \left[1 - e^{-(x/\lambda)^k}\right]^{\alpha-1} e^{-(x/\lambda)^k}$$

wherein x is the variable, in particular the size or surface of the kernel particle or kernel particle distribution class within the histogram, k is a first shape parameter, $\alpha$ is a second shape parameter, and $\lambda$ is a scale parameter, wherein the described parameters are the results of the analysing step. For fitting purposes to the histogram, x may be the median or average value of the class width of the histogram representing the determined kernel particle size or surface.

The cumulative exponential Weibull distribution can be calculated by:

$$F = (x; k, \lambda; \alpha) = \left[1 - e^{-(x/\lambda)^k}\right]^{\alpha}$$

By applying the mathematical function such as the continuous probability distribution or the polynomial regression, also referred as second model, the kernel particles which could not be identified within the image data can nevertheless be statistically determined, whereby the informative value of the image data is increased. Optionally, certain parameters of the probability distribution or the polynomial regression function of the second model may be preset.

The parameters may be preset based on the type of crop or other data or information that will be specified below. Preset parameters may reduce the processing effort within the image processing system which results in a faster determination of the KPS value or even in a real time or near real time determination of the KPS value during transfer of the crop material.

Real time or near real time determination can be defined as without significant delay, or within a set time constraint. The inventive method preferably is soft real time capable, this is, providing the estimated KPS value within a minor delay of a few seconds, preferably within less than 3 seconds.

In other embodiments, determining the KPS value comprises fitting of a regression function, also referred to as third model, to predetermined KPS values, wherein the determined parameters of the second model and optional features, e.g. values, of the histogram are input into the third model. The determination of the KPS value based on the analysis of the histogram by applying the mathematical function may further comprise applying a subsequent mathematical function. Additionally, the results of the generation of the histogram or certain features therefrom and the results of the analysis of the histogram are input into the subsequent mathematical function of the third model for determining of the KPS value.

The polynomial regression function of the second model and the regression function of the third model can be the same mathematical formula or can use different mathematical formulas.

Preferably, at least one parameter of the polynomial regression function of the second model is preset. Optionally, at least one parameter of the regression function of the third model is based on at least one determined parameter of the continuous probability function or the polynomial regression of the second model and is therefore preset.

A polynomial regression function of a higher degree may in general be determined by:

$$y = \beta_0 + \beta_1 x_1 + \beta_2 x_1{}^2 + \beta_3 x_1{}^3 + \cdots + \beta_n x_1{}^n + \varepsilon$$

Wherein $x_1$ is the variable, in particular the size or surface of the kernel particle or kernel particle distribution class within the histogram. The parameters $\beta_0$ to $\beta_n$ are shape parameters and $\varepsilon$ is an unobserved random error. For fitting purposes to the histogram, $x_1$ may be the median or average value of the class width of the histogram representing the determined kernel particle size or surface. The generation and calculation of regression functions is well known in statistics/mathematics, thus it is omitted to describe these operations in detail here.

Optionally, the regression function of the third model comprises multiple variables, optionally the polynomial regression might be of a multiple polynomial regression, which can be in general determined by:

$$y_T = x_{T1}\beta_1 + x_{T2}\beta_2 + \cdots + x_{TK}\beta_K + \varepsilon_T$$

Alternatively, any other regression function known in statistics and mathematics with at least on variable may be applied as second or third model, for example linear regression functions, non-linear regression functions, Bayesian linear regression, percentage regression, least absolute deviations, quantile regression, non-parametric regressions, scenario optimization, or distance metric learning. Even more preferably, the regression function of the third model comprises multiple variables and parameters.

The polynomial regression function of the second model may be of any degree to fit the generated histogram. Optionally, the degree or certain parameters of the polynomial regression function can be preset. These parameters may be preset based on the type of crop or other data or information that will be specified below.

Additionally, the fitting of the histogram of the continuous probability distribution or the polynomial regression function as the second model, and the regression function as the third model is processed by the image processing system and the fitting of the continuous probability distribution or the polynomial regression model as the second model, and the regression function as the third model is completed as soon as the fitting evaluation has reached a predetermined fitting quality.

Preferably, applying the mathematical function comprises a determination of at least one parameter of the continuous probability distribution or the polynomial regression function of the second model and optionally of the regression function of the third model.

Preferably, at least one parameter of the probability distribution or the polynomial regression function may be preset as specified above. This can reduce the processing effort of the image processing system if the quantity of parameters to determine is reduced to a minimum. In general, the determined parameters of the continuous probability distribution or the polynomial regression function of the second model are the results of the mathematical operation.

In other preferred embodiments, one or more predetermined agricultural machine settings and/or one or more crop material properties may be received by the image processing system from a control unit or from one or more sensors of the agricultural machine and may be assigned to the corresponding image data.

Preferably, the image processing system may be configured to be communicatively connected to a control unit and/or one or more sensors of the agricultural machine to receive machine settings or crop material properties thereof. Alternatively, the image processing system can be integrally comprised within the control unit of the agricultural machine. Optionally, the image processing system may be configured to receive environment data or field data of the area to be harvested, e.g., a type of crop, a soil composition, a soil moisture, an ambient temperature, a daytime, an actual surrounding light intensity during transfer of the crop material, image data of the area to be harvested and the like.

Preferably, the machine settings, the crop material properties, the environment data, and/or the field data may be assigned to the image data. Assigning the listed values/data/information may be carried out by adding meta data to the image data or by assigning the listed values/data/information to the image data in at least one database, such that the listed values/data/information comprising at least one of the machine settings, the crop material properties, the environment data, and/or the field data are assigned to the respective image data.

The described assignment serves for traceability of the machine settings, the crop material properties, the environment data, and/or the field data in view of the results of the analysing step and/or the of the determination step of the KPS value. Furthermore, this step may enable to draw conclusions regarding the dependency of the listed values/data/information to the determined KPS value. Optionally, the machine settings or the crop material settings may comprise the environment data and/or the field data.

Preferably, the predetermined machine settings are at least one of a machine processing capacity or a crop processing setting, preferably a crop processor opening, a length of cut, and/or an engine speed of the agricultural machine, wherein the crop material property is a moisture, a temperature, or a density of the harvested crop material. In general, any machine setting derived from sensors of the agricultural machine may be transmitted, received and processed via the control unit by the image processing system and assigned as meta data to the image data. A big data source helps to train and build machine learning algorithms but also to manually evaluate in order to draw conclusions from the variety of machine settings in view of the determined KPS value.

Additionally, the image processing system may be configured to receive CAN data of a CAN-BUS communication network of the agricultural machine, wherein the CAN data may comprise the machine settings, the crop material properties, the environment data, and/or the field data. Optionally, the image processing system can be configured to receive and process any other CAN data transmitted by the BUS communication network of the agricultural machine or saved within the control unit of the agricultural machine. Other CAN data may be one or more of an actual vehicle speed, properties of the agricultural machine, a conveying speed of the crop material on or within the conveying means or other suitable information. Alternatively, any other suited communication network or protocol other than CAN-BUS may be received and/or processed by the image processing system.

In other preferred embodiments, the generated histogram, the continuous probability distribution or the polynomial regression function of the second model is modified based on the machine settings and/or crop material properties.

The histogram can be modified by applying another mathematical function associated to CAN data on the detected values of sizes or surfaces of the kernel particles or their quantities within the predetermined ranges. The mathematical function associated to CAN data may comprise parameters which are associated to and determined by specified CAN data of the agricultural machine. In other words, the raw data of the histogram can be modified by a predetermined mathematical function that is influenced by specified CAN data, mostly preferred by the moisture of the crop material.

Alternatively, in other preferred embodiments, the continuous probability function, or the polynomial regression function of the second model is modified during the fitting process or after the fitting process to the histogram. This can be carried out by modifying the parameters of the continuous probability function or the polynomial regression function during the fitting process by a mathematical function associated to the CAN data or due to modifying specific values, especially the probability values for each predetermined class of kernel particle sizes or surfaces after the fitting process by a mathematical function associated with the CAN data.

The mathematical function associated with the CAN data may be of any known type of function, for example multiplication/division/addition/subtraction of preset values individually or within a matrix, a statistical function, or another polynomial regression function directly applied to the probability function or the polynomial regression function or to the results thereof.

In general, said mathematical function associated with the CAN data may be any sort of mathematical function or at least one preset value that is suited to change the curve progression and that is associated with the CAN data.

Optionally, the mathematical function associated with the CAN data may comprise modifying at least one of the histogram, the continuous probability distribution, the polynomial regression function, or a combination therefrom.

The histogram may be modified based on the machine settings and/or crop material properties in the analysing step, wherein the mathematical function may be applied to the modified histogram to increase the informative value of the image data about the kernel particles which cannot be directly identified therefrom.

Alternatively, at least one of the determined parameters of the continuous probability distribution or of the polynomial regression function may be modified based on the machine settings and/or crop material properties in the analysing step. It is further contemplated that the results of the mathematical function in the analysing step are subsequently modified. These suggested steps result in a more accurate determination of the KPS value as more parameters influencing the KPS value are included into the mathematical function or applied to the results thereof.

In a preferred embodiment, the determined KPS value may be modified in the KPS determination step by another mathematical function based on the machine settings and/or material properties resulting in a corrected KPS value taking into account machine settings and/or crop material properties influencing the KPS value. Due to the corrected KPS value, a KPS value can be provided to farmers and breeders that is more accurate and comparable to a laboratory determined KPS value.

In an even more preferred embodiment, the determined parameters of the second model and features of the histogram as well as machine settings and/or crop material properties are input into the third model in the KPS determination step, wherein the result of the regression model of the third model is the estimated KPS value which is corrected in view of the influencing machine settings and/or crop material properties.

In a preferred embodiment only parts of kernel particles of a predetermined size or surface range may be identified.

In some embodiments, a minimal and/or a maximal size and/or surface of kernel particles to be identified can be preset by the user of the agricultural machine, so that the identification of at least parts of kernel particles within the crop material is more accurate regarding the observation area and the properties of the optical sensor, e.g., resolution, focal length, illumination, exposure time, diaphragm, etc.

In further preferred embodiments, the image data comprises data of one image or data of a plurality of images captured by the optical sensor.

The image data comprising a single image may comprise a single image of a moment in time during transfer of the crop material or one continuous image of the complete transfer of the crop material, for example captured by a line camera or multiple images put together to one image. Further, the image data comprising multiple images may be video data comprising a plurality of single images of a certain frame rate. Additionally, a time stamp can be assigned to each image to determine the chronological capturing order.

Optionally, steps a) to f) are selectively repeated for image data comprising data of a single image or performed only once for image data comprising data of a plurality of images.

It is further possible to repeat only steps b) and c) for each single image, or steps b), c), and d) for each image, wherein a histogram is generated for the image data comprising a single image or a plurality of images, or steps b), c), d), and e), wherein a mathematical function is applied to analyse each histogram of each single image, or steps b), c), d), e), f), wherein a KPS value is determined for each single image. In the latter case, a common KPS value is determined in step f) based on individual KPS values of single images. Hence, a repetition of the method according to the invention is not limited to the described variants of steps and their order. The steps to be repeated for each image can be chosen accordingly, so that the computational effort can be minimized or the accuracy of the determined KPS value can be maximized.

In further embodiments, the method comprises one or more steps of storing results, intermediate results, or data of any performed method step within the image processing system. The results are stored in the image processing system or in a database communicatively connected to the image processing system.

In preferred embodiments, the method further comprises the steps of transmitting the KPS to an output device and displaying the KPS to the operator of the agricultural machine and saving the KPS as defined by the operator.

Additionally, the operator may be able to define batches of transferred crop material so that the determined KPS value can be assigned and saved in accordance with the defined batch. Optionally, the batches of transferred crop material can be defined automatically by the start and the stop of transfer of crop material. For example, a batch can be defined as the transfer of harvested crop material to a container of a trailer or truck. These further steps enable the operator of the agricultural machine to adjust the machine settings manually to influence the KPS value as the machine settings may directly influence the size and/or the surface of the kernel particles.

In further preferred embodiments, the method is triggered manually by an input of the operator of the agricultural machine or automatically when the transfer of the crop material is initiated, e.g., when the transfer of crop material from the agricultural machine to a container on a trailer is initiated. For manual input of the operator, the image processing system might comprise an input means, e.g., a touch sensitive display, a joystick and/or one or more buttons. The KPS value is preferably displayed in form of a triangle graph to the operator of the agricultural machine.

In other embodiments, the method further comprises the steps of comparing the determined KPS with a set KPS and calculating a difference between the determined KPS and the set KPS and transmitting a signal representative of the difference to the control unit, the control unit being configured to adjust the machine settings accordingly, preferably thereby forming a closed loop control.

The usage of the determined KPS value as feedback to form a closed loop control enables an enhanced control of the agricultural machine as the set KPS value can be achieved and therefore the quality of the feed can be increased.

A second aspect according to the present invention is an agricultural machine comprising a conveyor means for transferring harvested crop material, at least one optical sensor mounted on the conveyor means, wherein the at least one optical sensor is configured to generate image data of the harvested crop material transferred by and/or within the conveyor means, and an image processing system configured for processing the generated image data to determine a kernel processing score (KPS).

Any previously described method step, preferred embodiment, optional or additional feature of the method according to the invention may be applied to the agricultural machine according to the second aspect of the invention. Further, any embodiment, optional, alternative, or additional feature can be combined with each other to form new embodiments which have not been described herein, if not otherwise specified.

Any subsequent or further steps of the herein described embodiments may be arranged after the method steps according to the first aspect of the invention or may be arranged at suitable positions before or between the steps of the inventive method according to the first aspect of the invention. It is further imaginable that steps of the preferred embodiments may be performed at least partly in parallel to the steps of the inventive method or at least partly in parallel to steps of other specified embodiments.

Preferred embodiments and advantages of the inventive method and the inventive agricultural machine will now be described with reference to the attached drawings, in which:

Fig. 1 is a schematic view of the agricultural machine according to the invention;

Fig. 2 is a schematic illustration of image data according to the invention;

Fig. 3 is a schematic process flow according to a first embodiment of the method according to the invention;

Fig. 4 is a schematic process flow according to a second embodiment of the method according to the invention;

Fig. 5 is a schematic illustration of the modification of the generated histogram; and

Fig. 6 is a schematic illustration of the curve fitting process of a continuous probability function to the generated and/or modified histogram according to the invention.

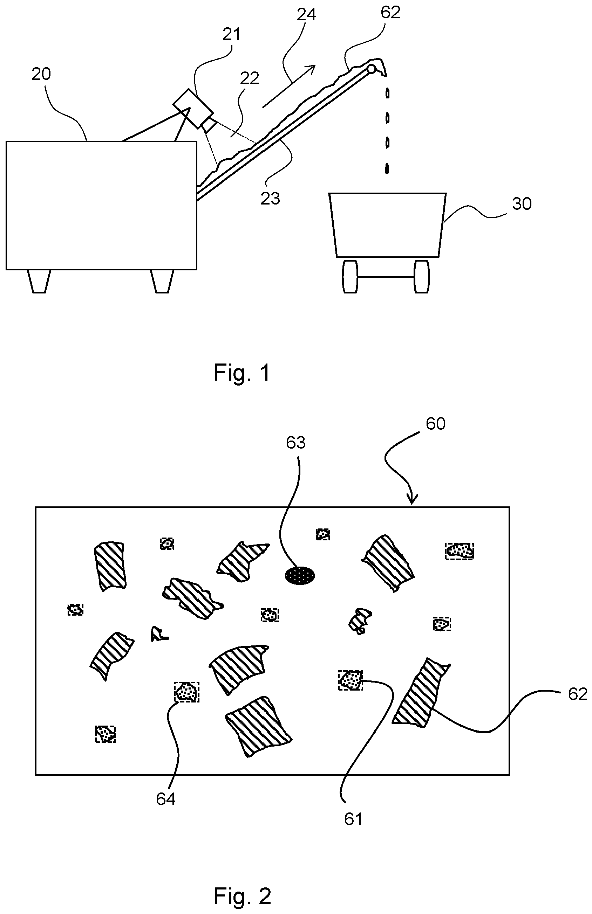

Fig. 1 shows an embodiment of the agricultural machine 20 with an optical sensor 21 that is directed towards crop material 62 being transferred by conveyor means 23 from the agricultural machine 20 to a container on a separate trailer 30 configured for transporting of the crop material 62. In this embodiment, the conveyor means 23 is a conveyor belt on which the crop material 62 including the kernel particles 61 is laying loose. The crop material 62 in this embodiment is a silage of harvested corn. In other non-specified embodiments, the crop material 62 might be any other feed material which comprises features such as kernel particle size that must be determined within the crop material 62. The optical sensor 21 has an observation area 22 that defines the area of crop material 62 to be captured. The optical sensor 21 is slightly inclined towards the conveying direction 24 of the conveyor means 23. It is not necessary that the optical sensor 21 is orthogonally arranged to the conveying direction 24. In this embodiment, the conveying direction 24 is directed along the conveyor means 23 away from the agricultural machine 20. In an embodiment, which is not illustrated here, the conveying direction 24 might be directed to the agricultural machine 20. In another embodiment, the optical sensor 21 can be a handheld sensor, e.g. a camera or a handheld device comprising a camera, directed to samples taken from the crop material processed by the agricultural machine. Thus, the inventive method may be carried offboard of the agricultural machine.

The agricultural machine 20 comprises a network of interconnected sensors and actuators which transmit and receive measurements from and towards the control unit onboard of the agricultural machine 20. Said sensors and actuators are further configured to communicate by CAN data, wherein any measurements like the crop moisture, the capacity of the amount of crop being harvested, the crop processor opening, in particular the opening between the two crop processor rolls, the length of cut, and the engine speed are transmitted to the control unit. Said actuators are configured to adjust the machine settings directly or indirectly such that the measurements are influenced by these adjustments, wherein a closed loop control may be applied. The CAN data are monitored, evaluated, controlled and stored within the control unit. The image processing system is configured to request and receive CAN data from the control unit to modify the generated histogram or the continuous probability distribution 50 or polynomial regression function. The image processing system is in this embodiment integrally formed with the control unit.

Fig. 2 schematically illustrates image data 60 of an image captured by the optical sensor 21 of the agricultural machine 20 of Fig. 1. The image data 60 was captured within a predetermined frame rate during a continuous transportation of the crop material 62 on the conveying means 23. The image data 60 may in other non-disclosed embodiment be derived from video data. Optionally, the frame rate of the optical sensor 21 may be adjusted to the conveying speed of the conveying means 23. The image data 60 comprises in this example crop material 62, kernel particles 61 as well as foreign matter 63 like soil or stones. In another embodiment, multiple images might be captured by the optical sensor 21 and

The kernel particle 61 size or surface and their quantity is determined in a process supported by machine learning, referred to as first model. In particular, it may be carried out by a convolutional neural network (CNN) that is configured and trained to identify kernel particles 61 within the image data 60 by categorization. The size or surface of the kernel particles 61 is determined by framing the kernel particles 61 with a virtual rectangle 64 and determining the amount of pixel within the virtual rectangle 64 or the length and width of the virtual rectangle 64 in pixels. Other determination methods of determining the size or surface of kernel particles 61 may be applied, for example determining the number of pixels with a predetermined colour range within the detected kernel particle 61.

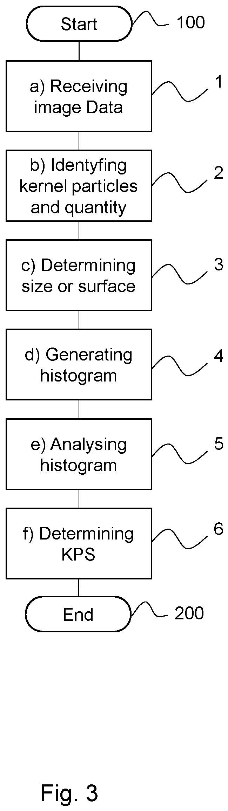

Fig. 3 shows a schematic process flow according to a first embodiment of the inventive method. The process start 100 initiates the receiving step a) of receiving the image data 60 from the optical sensor 21, preferably by the image processing system. In this embodiment, the image data 60 preferably comprises data of one image, wherein the image data 60 is received by the image processing system frequently and consecutively, so that the method in this first embodiment will be carried out based on one image.

Further, the identifying step b) of identifying of at least parts of kernel particles 61 and a quantity thereof within the received image data 60 is triggered by receiving the image data 60. The identifying step b) may be initiated automatically by receiving image data 60 of images captured by the optical sensor 21 or may be initiated manually by the user of the agricultural machine 20. The kernel particles 61 are mixed with and contained within the crop material 62. The kernel particles 61 comprise a colour and/or structure which enables a distinction from other crop material 62 and foreign matter 63. The kernel particle 61 size or surface and their quantities are preferably determined by machine learning, in particular carried out by a convolutional neural network (CNN).

After the image data 60 has been processed in step b), the size or surface of each identified kernel particle 61 in said image data 60 is determined in the determination step c). In this embodiment, the operator of the agricultural machine 20 may choose manually whether the size or the surface of the kernel particles 61 will be determined. The operator may also choose a range of kernel particles size or surface to be detected. In other non-specified embodiments, the image processing system itself may choose between the determination of the size or the surface of the kernel particles 61 depending on machine settings and/or crop material properties comprised within the CAN data of the agricultural machine 20.

Subsequent to the determination of the size or surface of the kernel particles 61 within the image data 60 in step c), the histogram will be generated in step d). The histogram is generated in this embodiment with predetermined regular classes with equal class widths 42 of a size or surface of the identified kernel particle 61. The histogram provides information about the distribution of the identified quantity of kernels within the classes.

In the next step, the analysing step e), the histogram is analysed by applying the mathematical function to the generated histogram to increase the informative value of the image data 60. In this embodiment, a suited continuous probability distribution 50, referred to as second model, will be applied to the histogram, e.g. Weibull, exponential Weibull, Burr, or normal distribution. The fitting of the continuous probability distribution 50 requires determining of parameters of the function. When a best fit according to a preset instruction of the continuous probability distribution to the histogram has been achieved, the determined parameters and features of the histogram will be input into a regression function, referred to as third model. The continuous probability distribution 50 also includes values for kernel particles 61 that are present in the image data 60 but could not previously be identified.

In other words, applying the mathematical function to the histogram, in particular the fitting of a continuous probability distribution 50, enables to assess the kernel particles 61 that are present in the image data 60 of the captured image of the harvested crop material 62, but which could not previously be identified as at least parts of kernel particles 61. Therefore, applying the mathematical function to the histogram increases the informative value of the image data 60.

Based on the results of the analysing step e), the KPS of the image data 60, in particular of one image in this embodiment, can be determined in the KPS determining step f). In this embodiment, the regression function assigns the parameters of the second model and the features of the histogram to predetermined KPS values on the basis of sample data for which a laboratory KPS value has been determined. In a non-illustrated embodiment, the machine settings and/or crop material properties are additionally input into the third model to correct/modify the KPS value in view of KPS influencing machine settings and/or crop material properties, trained.

Lastly, the method end 200 will be initiated after the determination of the KPS value. In this embodiment, only image data 60 comprising one captured image is processed to determine a KPS value. It is obvious that multiple images may be processed sequentially or in parallel to each other in other non-illustrated embodiments.

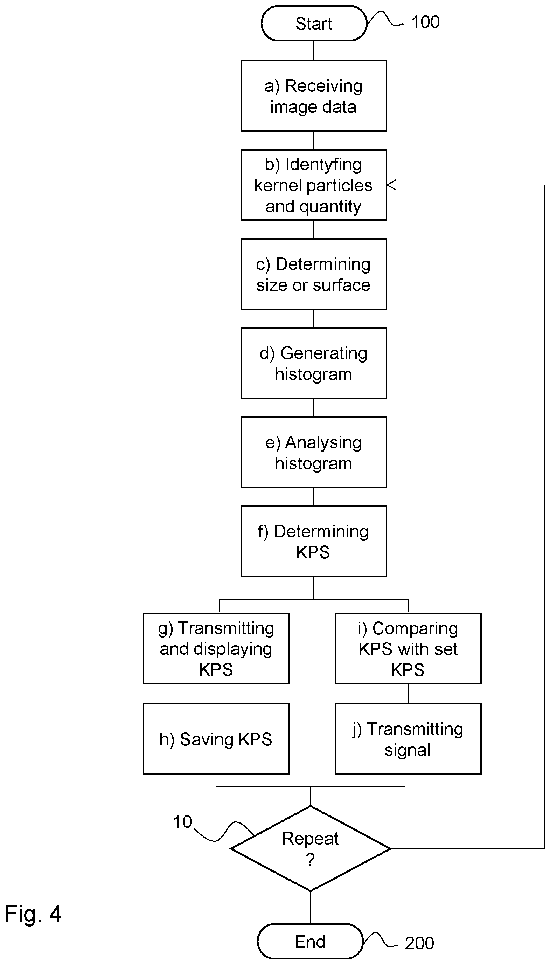

Fig. 4 shows a schematic process flow according to a second embodiment of the method according to the invention. In this embodiment, the method steps a) to f) are the same as already specified with respect to the first embodiment of Fig. 3. The second embodiment additionally comprises a transmission step g) of the KPS value to an output device and displaying the KPS to the operator of the agricultural machine 20. Thus, the operator receives information about the actual KPS value while harvesting the crop material 62, i.e. in real-time or at least with minimal time delay. In a subsequent step h) the KPS value may be stored within the image processing system or a communicatively coupled storage unit or database as defined by the operator. The operator may store the determined KPS value(s) according to a certain transfer of crop material 62, e.g., when transferring crop material 62 from the agricultural machine 20 to a trailer 30, wherein the KPS value is associated with the information about the trailer 30.

Additional steps i) and j) may be carried out in parallel to the steps g) and h) in the second embodiment. In other non-specified embodiments, steps i), j), g) and h) may be arranged in any suitable order, subsequent to or in parallel to the method steps a) to f) according to the first aspect of the invention.

The comparing step i) of comparing a KPS with a set KPS and calculating a difference between the determined KPS and the set KPS is directly performed, after the KPS has been determined.

Next, a step j) of transmitting a signal representative of the difference to the control unit is performed. Upon receiving the signal, the control unit is further configured to adjust the machine settings in order to influence the KPS value, so that the difference between the determined KPS and the set KPS becomes minimal. The machine settings of the agricultural machine 20 can be, for example, the crop moisture, the capacity as a measure of the amount of crop being harvested, a crop processor opening, especially the opening between two crop processor rolls trashing/breaking the crop, the length of cut of the harvested crop, or the engine speed driving crop processing means to change the speed of and power output to the crop processing means.

Additionally, the machine settings may be selectively adjusted in a way that the crop is reprocessed or reworked, for example trashed/broken multiple times, to result a certain set KPS value. As a result, a closed loop control is formed which generates feed material with preset KPS values and thereby increases the quality of the feed material.

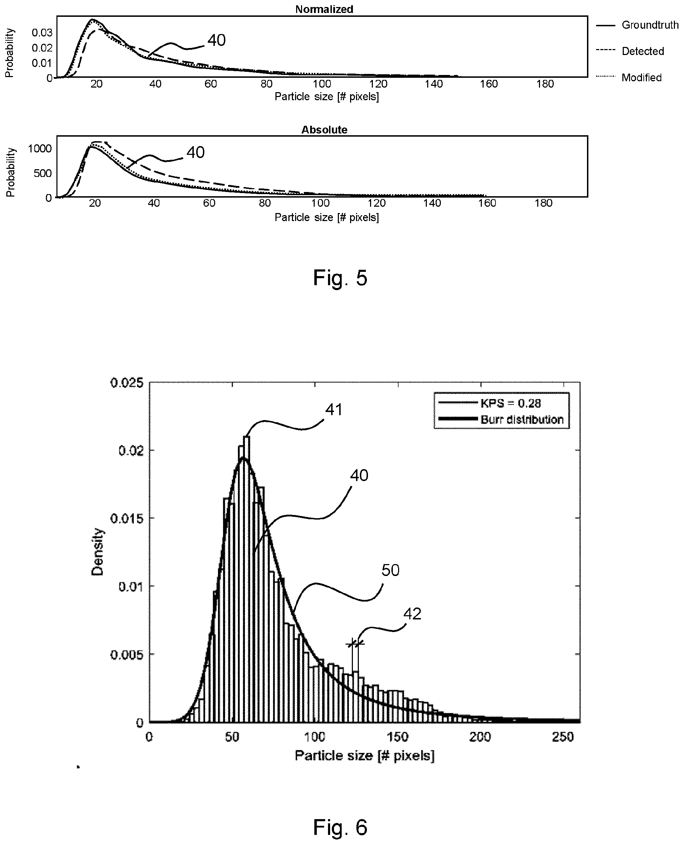

Fig. 5 discloses a schematic illustration of two graphs with normalized and absolute Y-axis values. The X-axis represents the kernel particle 61 size as the amount of pixels. Each graph shows simplified outer curve progressions of three histograms of the groundtruth histogram, the detected, generated histogram and the modified histogram 40. The groundtruth histogram represents the histogram which has been determined by a conventional analysis of the kernel particle 61 sizes and surfaces within a laboratory. The detected, generated histogram represent the generated histogram according to the present invention. The modified histogram 40 according to the present invention is the result of applying a mathematical function associated with CAN data of the agricultural machine 20 onto the detected histogram values. In other embodiments, the detected, generated histogram may not be modified by a mathematical function associated to CAN data.

It can be seen from Fig. 5 that the detection values differ from the groundtruth values. One or more of the said measurement values of Fig. 3 comprised within the CAN data causes the detected values to differ from the groundtruth values. Due to evaluation of the most relevant sensor measurements or CAN data, respectively, a mathematical function associated to the CAN data to manipulate the detected, generated histogram therefrom can be designed. The mathematical function associated with the CAN data preferably makes use of steady parameters and variable parameters in reference to the most relevant CAN data. It has been observed that the most relevant CAN data is the moisture of the crop material. After applying the mathematical function associated most preferably to the crop material moisture derived from the CAN data, the modified histogram 40 fits very close to the groundtruth histogram which helps to increase the accuracy of the KPS value determination.

In Fig. 6 an example of applying the mathematical function onto the modified histogram 40 of Fig. 5 and analysing the latter within the image processing system is illustrated. In this embodiment, the continuous probability function 50 according to Burr as second model has been fitted to the modified histogram values 41 within the histogram 40 of Fig. 5. The particle size classes comprise equal class widths 42. Furthermore, very small kernel particle 61 sizes, e.g. fragments of kernel particles, which have not been detected within the image data 60 due their small size towards zero on the left side of the histogram 40 can be determined by applying the mathematical function to the modified histogram 40 and thus the informative value of the image data 60 can be increased.

In other non-described embodiments, the mathematical function can be directly applied to the detected, generated histogram which has not been modified.

During the fitting process, at least one parameter of the continuous probability distribution is calculated and optimized until a best fit scenario according to present requirements has been achieved. The at least one calculated parameter as result of the mathematical function is compared to preset parameters or configurations of parameters which are mapped to specific KPS values. Here the mapping is carried out by applying a regression function with the parameters of the continuous probability function and features of the histogram as inputs. Thus, the KPS value can be very accurately determined and therewith the quality of the feeding material.

With the subject matter of the present invention, a method for determining a kernel processing score (KPS) onboard of an agricultural machine and the agricultural machine thereto has been provided which enables an accurate and even real time or near real time capable determination of the KPS value of crop material as feeding stuff and which is further simple to integrate and retrofit on present agricultural machines.

List of reference numbers:

| 10 | repeat decission |
| 20 | agricultural machine |
| 21 | optical sensor |
| 22 | observation area |
| 23 | conveyor means |
| 24 | conveying direction |
| 30 | trailer |
| 40 | histogram |
| 41 | modified histogram values |
| 42 | class width |
| 50 | continuous probability distribution |
| 60 | image data |
| 61 | kernel particle |
| 62 | crop material |
| 63 | foreign matter |
| 64 | virtual rectangle |
| 100 | start of method |
| 200 | end of method |
| a | receiving image data |
| b | identifying kernel particles |
| c | determining size or surface |
| d | generating histogram |
| e | analysing histogram |
| f | determining KPS |
| g | transmitting and displaying KPS |
| h | saving KPS |
| i | comparing KPS with set KPS |
| j | transmitting signal |

**Claims**

1. Method for determining a kernel processing score (KPS) onboard of an agricultural machine (20), the agricultural machine (20) comprising:

   a conveyor means (23) for transferring harvested crop material (15) and an optical sensor (21) wherein the optical sensor (21) is configured to generate image data of the harvested crop material (15) transferred by and/or within the conveyor means (23); and
   an image processing system configured for processing the generated image data to determine a kernel processing score (KPS),
   wherein the method comprises the steps of:

   a) receiving image data from the optical sensor (21);
   b) identifying at least parts of kernel particles and a quantity thereof within the received image data;
   c) determining a size or surface of each identified kernel particle in said image data;
   d) generating a histogram based on the detected size or surface of the identified kernel particles and their quantities;
   e) analysing the histogram by applying a mathematical function to the generated histogram to increase the informative value of the image data; and
   f) determining the KPS based on the analysing step.

2. Method according to claim 1, wherein applying the mathematical function comprises fitting of a continuous probability distribution to the generated histogram.

3. Method according to claim 1, wherein applying the mathematical function comprises fitting of a polynomial regression function to the generated histogram.

4. Method according to claim 2 or claim 3, wherein applying the mathematical function comprises a determination of at least one parameter of the continuous probability distribution or the polynomial regression function.

5. Method according to claim 4, wherein the KPS is determined based on the at least one determined parameter.

6. Method according to any of the preceding claims, wherein one or more predetermined agricultural machine settings and/or one or more crop material properties are received by the image processing system from a control unit or from one or more sensors of the agricultural machine and are assigned to the corresponding image data.

7. Method according to any of the preceding claims, wherein the generated histogram and/or the mathematical function is modified based on the machine settings and/or crop material properties.

8. Method according to claims 6 or 7, wherein the predetermined machine settings are at least one of a machine processing capacity or a crop processing setting, preferably a crop processor opening, a length of cut, and/or an engine speed of the agricultural machine, wherein the crop material property is a moisture, a temperature, or a density of the harvested crop material.

9. Method according to any of the preceding claims, wherein only parts of kernel particles of a predetermined size or surface range are identified.

10. Method according to any of the preceding claims, wherein the image data comprises data of one image or data of a plurality of images captured by the optical sensor.

11. Method according to claim 10, wherein the method steps a) to f) are selectively repeated for image data comprising data of a single image or performed only once for image data comprising data of a plurality of images.

12. Method according to any of the preceding claims, wherein the method further comprises the steps of:

g) transmitting the KPS to an output device and displaying the KPS to the operator of the agricultural machine (20); and
h) saving the KPS as defined by the operator.

13. Method according to any of the preceding claims, wherein the method is triggered manually by an input of the operator or automatically when the transfer of the crop material is initiated.

14. Method according to any of the preceding claims, wherein the method further comprises the steps of:

i) comparing the determined KPS with a set KPS and calculating a difference between the determined KPS and the set KPS; and
j) transmitting a signal representative of the difference to the control unit, the control unit being configured to adjust the machine settings accordingly, preferably thereby forming a closed loop control.

15. Agricultural machine (20) comprising a conveyor means (23) for transferring harvested crop material (15), at least one optical sensor (21) mounted on the conveyor means (23), wherein the at least one optical sensor (21) is configured to generate image data of the harvested crop material (15) transferred by and/or within the conveyor means (23), and an image processing system configured for processing the generated image data to determine a kernel processing score (KPS) according to the method of any of claims 1 to 14.

Fig. 1

Fig. 2

Start ⌇ 100

a) Receiving
image Data ⌇ 1

b) Identyfing
kernel particles
and quantity ⌇ 2

c) Determining
size or surface ⌇ 3

d) Generating
histogram ⌇ 4

e) Analysing
histogram ⌇ 5

f) Determining
KPS ⌇ 6

End ⌇ 200

Fig. 3

Start — 100

a) Receiving
image data

b) Identyfing
kernel particles
and quantity

c) Determining
size or surface

d) Generating
histogram

e) Analysing
histogram

f) Determining
KPS

g) Transmitting
and displaying
KPS

i) Comparing
KPS with set
KPS

h) Saving KPS

j) Transmitting
signal

10 — Repeat
?

Fig. 4

End — 200

Fig. 5

Fig. 6

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/000011 A1 (SCHLEUSNER BRADLEY K [US] ET AL) 4 January 2018 (2018-01-04) | 1-4,6,7, 9,10,13, 15 | INV. A01D41/127 |
| A | * See the passages cited in the ESOP * | 5,8,11, 12,14 | |
| A | US 2022/207733 A1 (KOCH JARED J [US] ET AL) 30 June 2022 (2022-06-30) * the whole document * | 1-15 | |
| A | US 10 172 285 B2 (UNIV CARNEGIE MELLON [US]; DEERE & CO [US]) 8 January 2019 (2019-01-08) * the whole document * | 1-15 | |
| A | US 2022/132736 A1 (MEYERS ZACHARY A [US] ET AL) 5 May 2022 (2022-05-05) * the whole document * | 1-15 | |
| A | DE 10 2021 117470 A1 (DEERE & CO [US]) 27 January 2022 (2022-01-27) * the whole document * | 1-15 | TECHNICAL FIELDS SEARCHED (IPC) A01D |
| A | US 2023/133909 A1 (BONEFAS ZACHARY T [US] ET AL) 4 May 2023 (2023-05-04) * the whole document * | 1-15 | |
| A | US 8 045 168 B2 (CNH AMERICA LLC [US]) 25 October 2011 (2011-10-25) * the whole document * | 1-15 | |

The present search report has been drawn up for all claims

| Place of search | Date of completion of the search | Examiner |
|---|---|---|
| Munich | 16 September 2024 | Giorgini, Gabriele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 17 0542

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2024

| Patent document cited in search report | Publication date | Patent family member(s) | | Publication date |
|---|---|---|---|---|
| US 2018000011 A1 | 04-01-2018 | NONE | | |
| US 2022207733 A1 | 30-06-2022 | EP | 4023048 A1 | 06-07-2022 |
| | | US | 2022207733 A1 | 30-06-2022 |
| US 10172285 B2 | 08-01-2019 | EP | 3158849 A1 | 26-04-2017 |
| | | US | 2017112056 A1 | 27-04-2017 |
| US 2022132736 A1 | 05-05-2022 | BR | 102021016842 A2 | 22-11-2022 |
| | | CN | 114430992 A | 06-05-2022 |
| | | DE | 102021126421 A1 | 05-05-2022 |
| | | US | 2022132736 A1 | 05-05-2022 |
| DE 102021117470 A1 | 27-01-2022 | DE | 102021117470 A1 | 27-01-2022 |
| | | US | 2022022376 A1 | 27-01-2022 |
| US 2023133909 A1 | 04-05-2023 | AU | 2019246794 A1 | 14-05-2020 |
| | | BR | 102019022332 A2 | 26-05-2020 |
| | | EP | 3646703 A1 | 06-05-2020 |
| | | US | 2020128735 A1 | 30-04-2020 |
| | | US | 2023133909 A1 | 04-05-2023 |
| US 8045168 B2 | 25-10-2011 | EP | 1782046 A1 | 09-05-2007 |
| | | US | 2009258684 A1 | 15-10-2009 |
| | | WO | 2006010761 A1 | 02-02-2006 |

EPO FORM P0459

For more details about this annex : see Official Journal of the European Patent Office, No. 12/82